# EUROPEAN PATENT SPECIFICATION

(11) **EP 3 639 220 B1**
(45) Date of publication and mention of the grant of the patent: **14.10.2026**
(21) Application number: 18817958.4
(22) Date of filing: 12.06.2018
(51) Int. Cl.: G06Q 10/0631, G06Q 10/20

(54) **WORKSCOPE SYSTEM AND METHOD OF USE THEREOF**
ARBEITSUMFANGSSYSTEM UND VERFAHREN ZU DESSEN VERWENDUNG
SYSTÈME D'ÉNONCÉ DE TRAVAUX ET SA MÉTHODE D'UTILISATION

(30) Priority: 12.06.2017 US 201762518332 P; 11.06.2018 US 201816005667
(43) Date of publication of application: 22.04.2020
(73) Proprietor: General Electric Company, Evendale, OH 45215 (US)
(72) Inventor: JOHN, Vijay, Thomas, West Chester OH 45069 (US); KRIVENKO, Mikhail, San Ramon CA 94583-9130 (US)
(74) Representative: Openshaw & Co.
(86) International application number: PCT/US2018/036993
(87) International publication number: WO 2018/231749

(56) References cited:
- US-A1- 2006 010 152
- US-A1- 2009 281 688
- US-A1- 2010 312 388
- US-A1- 2012 191 496
- US-A1- 2013 288 210
- US-A1- 2017 018 026

## Description

### BACKGROUND

The management of large scale fleets of industrial assets typically requires scheduling and conducting maintenance tasks to service faulty equipment, prevent future equipment failure, and/or to comply with regulatory requirements. Typically, when an asset reaches a shop for maintenance, a typical management system is used to plan, carry out, and track a various set of tasks. These typical management systems require significant human input and decision making given the complexity of the tasks that need to be carried out and the technological complexity of the asset to be serviced. Furthermore, there is no current standardized methodology for storing and recalling workscope information for usage and tracking. As such, repair shops store workscope information in different formats, and without standardization. This can lead shops to spend a lot of time looking for workscope related information in different locations, which can further reduce productivity. In addition, workscope escalations may occur at a higher than desired rate, and the number of workscope escalations can have a significant financial impact.

US2012191496A1 (MUENCH DAVID STEPHEN [US] ET AL) 26 July 2012 describes a method of determining component repair activities that includes providing a computer-based component workscope routing system. The method includes making a determination of eligibility of the component for a standardized repair workscope or an enhanced repair workscope. The method also involves taking into account and managing disassembly levels.

US2006010152A1 (MATTHIEU CATALANO et al.) 12 January 2006 similarly relates to a workscope management system taking into account also disassembly levels.

### SUMMARY

One embodiment provides a system for workscoping an asset in accordance with claim 1.

### BRIEF DESCRIPTION OF THE DRAWINGS

FIG. 1 illustrates a controller in accordance with one embodiment.
FIG. 2 illustrates a screenshot in accordance with one embodiment.
FIG. 3 illustrates a screenshot in accordance with one embodiment.
FIG. 4 illustrates a screenshot in accordance with one embodiment.

### DETAILED DESCRIPTION

Illustrative embodiments may take form in various components and arrangements of components. Illustrative embodiments are shown in the accompanying drawings, throughout which like reference numerals may indicate corresponding or similar parts in the various drawings. The drawings are only for purposes of illustrating the embodiments and are not to be construed as limiting the disclosure. Given the following enabling description of the drawings, the novel aspects of the present disclosure should become evident to a person of ordinary skill in the relevant art(s).

As noted above, repair shops typically store workscope information in different formats, and without standardization. This can lead shop personnel to spend a lot of time looking for workscope related information in different locations, which can reduce productivity. In addition, workscope escalations may occur at a higher than desired rate, and the number of workscope escalations can lead to a significant increase in costs.

As such, the exemplary embodiments provide tangible data associated with the cause of workscope escalations, and they enable a process to determine when escalations will occur, associate costs with escalations, and prevent escalations, thus enabling an optimal workscope to be performed, which in time maximizes in-field time-of-use of the asset. For example, when the asset is an airplane engine, the in-field time-of-use corresponds to the time on the engine spends on the wing without being serviced.

An exemplary workscope tool according to an embodiment enables the intelligent mapping of Service Bulletins (SBs) to specific modules (i.e., ATAs). Specifically, within an asset there are modules that define the entire asset, and the modules perform different functions and/or have different purposes. For example, for an engine, the modules can be, but are not limited to, a fan, a compressor, a combustor, and an HPT. Thus, in the exemplary workscope tool, an SB can be mapped to the modules via a pre-existing or predetermined set of criteria, or via a mapping table. Additionally, or alternatively, the SBs can be mapped to the modules dynamically. For example, the SBs can be mapped to the modules using optical character recognition, machine learning and/or artificial intelligence.

Furthermore, the exemplary embodiments featured herein provide for mapping SBs to the respective workscope levels based on the level of teardown to be performed to do maintenance indicated or required in the SB on the modules of the asset. For example, a given module may have four escalating teardown levels, where the first teardown level (e.g., 1) requires a shop or technician to maintain the module with no disassembly, and not perform any repairs, and the fourth teardown level requires the shop or technician to completely disassemble the module down to a piece part level. In this scenario, an exemplary workscope tool can map a SB to a module to one of the four teardown levels based on the requirements of the SB. The mapping can be done based on a preexisting or predetermined set of criteria, or via a mapping table. Additionally, or alternatively, the mapping may be accomplished dynamically. For example, the mapping can be accomplished via machine learning and/or artificial intelligence.

Moreover, the embodiments featured herein can provide for the addition of multiple modules to a SB. For example, a part included in a SB for a first module may impact multiple other modules. The exemplary workscope tool thus enables the addition of the multiple other modules to the SB. The additional modules can be added to the SB dynamically. For example, the workscope tool can analyze the SB and components or parts included in the bulletin, and based on the analysis, identify additional modules impacted by the components or parts; furthermore, the workscope tool can add the additional modules to the workscope or SB.

The embodiments featured herein further provide the ability to drive workscope disassembly levels automatically based on a SB. If there are multiple SBs for a module, the exemplary workscope tool can analyze the multiple SBs and determine or drive the teardown level for that module. For example, if there are three SBs for a module, wherein the first SB requires a teardown level of 1, the second SB requires a teardown level of 2, and the third SB requires a teardown level of 4, the workscope tool can determine that the appropriate or required teardown level to complete or satisfy all of the SBs is 4. Also, where a current teardown level has been determined for a module, the workscope tool can identify conflicts and determine a new teardown level where a shop or technician determines the need to, or wants to, do additional service beyond the service bulletin. For example, if a module currently has a teardown level of 2, and a technician wants to do additional service on the module, then the workscope tool can determine that the additional service will escalate the teardown level for the module and identify the cost associated with the escalation of the teardown level.

Furthermore, an exemplary workscope tool can provide the capability to determine SBs applicable to a particular asset of module based on an identity of the asset or module. For example, the exemplary workscope tool can determine SBs applicable to a particular engine based on a serial number of the engine. For instance, the exemplary workscope tool can identify an engine based on the serial number, determine and subtract SBs that have previously been completed for the engine, and determine and add SBs that are outstanding.

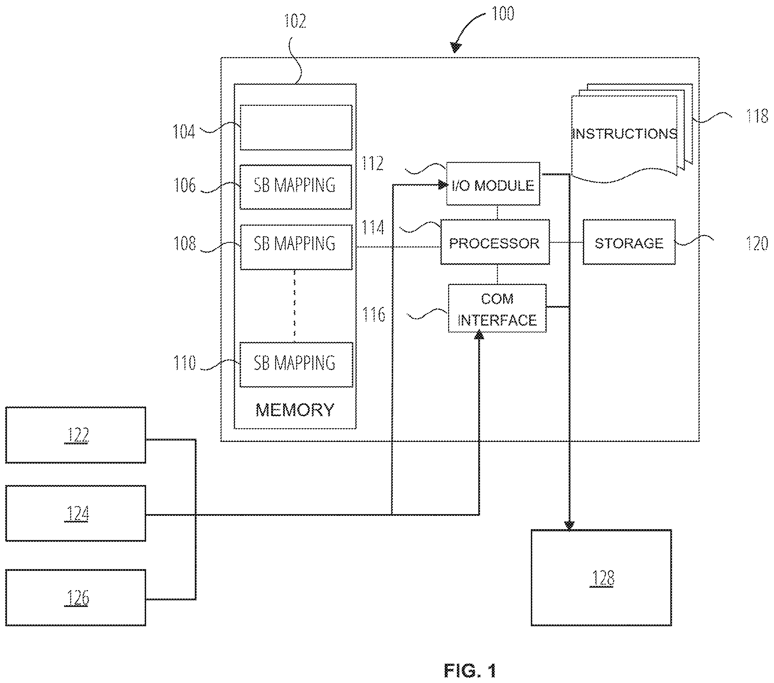

FIG. 1 shows a block diagram of a controller 100, which can include a processor 114 that has a specific structure. The controller 100 may be part of the exemplary workscope tool described above, conferring it the specific features discussed. The specific structure of the processor 114 can be imparted to it by instructions stored in a memory 102 included in (or accessible to) the controller 100 and/or by instructions 118 that can be fetched by the processor 114 from a storage medium 120. The storage medium 120 may be co-located with the controller 100 as shown, or it may be located elsewhere and be communicatively coupled to controller 100.

The controller 100 can be a stand-alone programmable system, or it can be a programmable module located in a much larger system. The controller may include one or more hardware and/or software components configured to fetch, decode, execute, store, analyze, distribute, evaluate, and/or categorize information. Furthermore, the controller 100 can include an input/output (I/O) module 112 that can be configured to interface with a plurality of databases (e.g., database 122, 124, and 126). These databases may include information relating to SBs that are to be applied to specific modules of an asset under test, such application depending on the instructions 118 or instructions fetched from the memory 102.

The processor 114 may include one or more processing devices or cores (not shown). In some embodiments, the processor 114 may be a plurality of processors, each having either one or more cores. The processor 114 can be configured to execute instructions fetched from the memory 102, i.e. from one of memory blocks 104, 106, 108, or memory block 110, or the instructions may be fetched from the storage medium 120, or from a remote device connected to the controller 100 via a communication interface 116.

Without loss of generality, the storage medium 120 and/or memory 102 may include a volatile or non-volatile, magnetic, semiconductor, tape, optical, removable, non-removable, read-only, random-access, or any type of non-transitory computer-readable computer medium. The storage medium 120 and/or the memory 102 may include programs and/or other information that may be used by the processor 114. Furthermore, the storage medium 120 may be configured to log data processed, recorded, or collected during the operation of controller 100. The data may be time-stamped, location-stamped, cataloged, indexed, or organized in a variety of ways consistent with data storage practice.

In one embodiment, for example, the memory blocks 106, 108, or 110 may include instructions that, when executed by the processor 114, cause the processor 114 to perform certain operations. The operations can include determining which service bulletins fetched from one of databases 122, 124, and 126 are applicable to a module of an asset based on an identity of the asset or the module. The identity of the asset or the module may be received via the I/O module 112. The operations can further include mapping a specific service bulletin to the asset or the module, and they may further include associating a disassembly level to the service bulletin. The operations may also include adding a set of modules to the service bulletin, thus updating the service bulletins and saving them back to one of the databases 122, 124, and 126. Upon completion of the aforementioned operations, the controller 100 may output a workscope template 128.

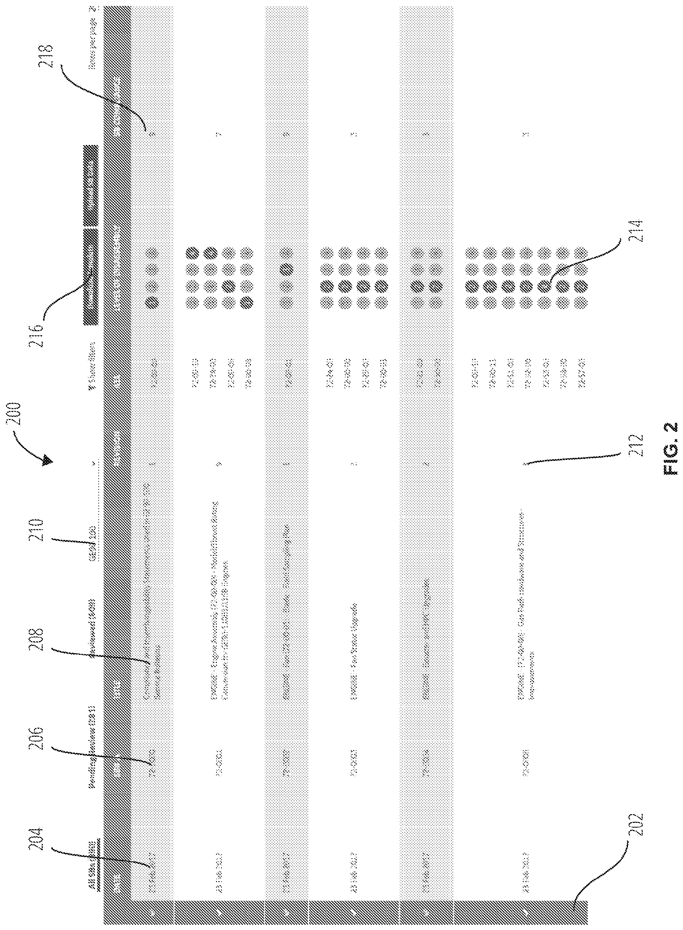

FIG. 2 shows an example screenshot 200 of the updated workscope template 128. The workscope template 128 may include a field 202 indicating all the SBs that have been fetched by the processor 114. The field 204 may indicate a date at which the workscoping is being conducted. The field 206 indicates the module associated with each SBs that have been fetched, whereas the field 208 may include descriptive information relating to each SB. The field 210 may indicate a particular manufacturer or an identifier of the asset. The workscope template 128 may further include a field 212 indicating the number of revisions associated with each SB. The workscope template 128 also includes fields 214, 216, and 218 which indicate, respectively, the determined level of disassembly for each module according to its applicable SB, interactable features for exporting the workscope template 128, and compliance information associated with the SB. It is noted that the screenshot 200 represents an exemplary configuration and that the workscope template 128 may be structured differently than shown, without departing from the scope of the present disclosure.

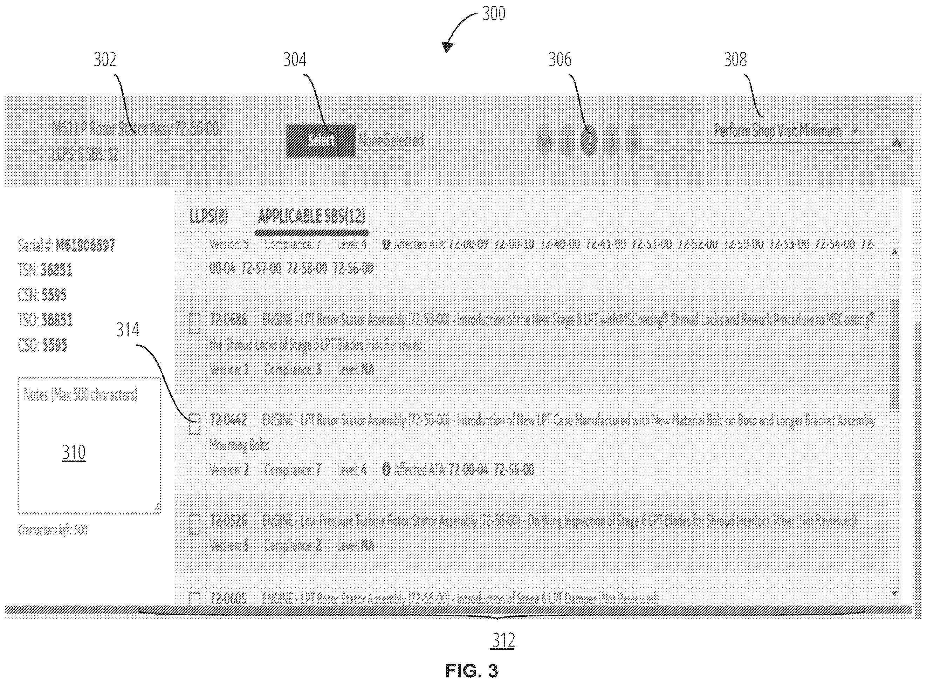

FIG. 3 illustrates additional features of the workscope template 128 through a screenshot 300. For example, the workscope template 128 may include a field 302 that indicates a particular module and a field 304 for selecting a particular SB that has been map. The screenshot 300 further includes a disassembly level indicated by the field 306 and additional workscope information shown in the field 308. A field 310 may be used to enter notes for future reference.

All possible SBs that have been mapped to the module identified in the field 302 may be tabulated in the field 312. When a user selects a particular SB, say at the field 314, the exemplary workscope tool may prompt the user that the selected SB will increase the module's disassembly level listed in the field 306, at which point a user may discontinue and select another SB or may override the notification and proceed with the increased level of disassembly.

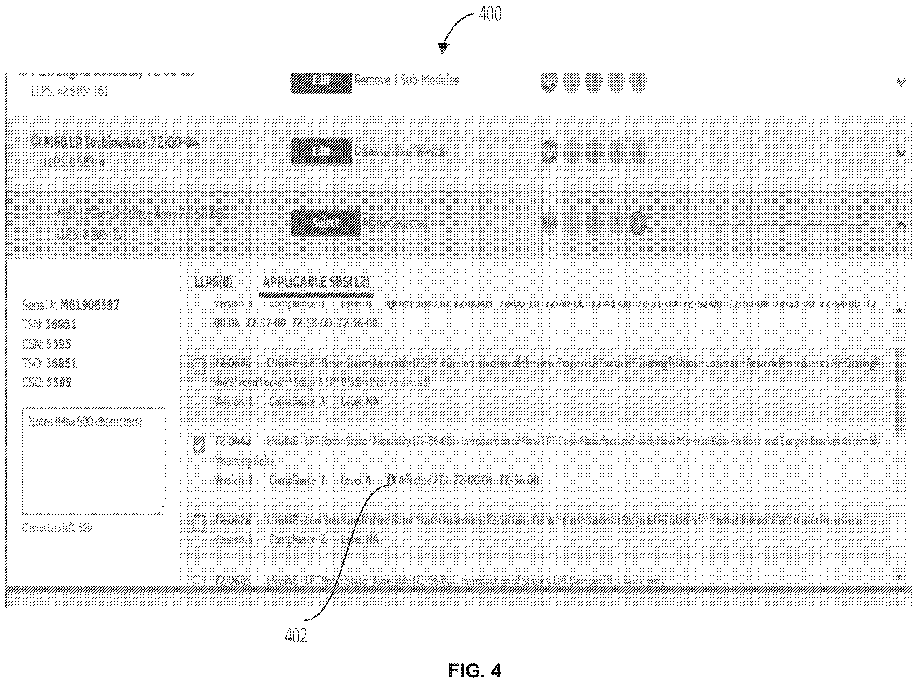

As shown in FIG. 4 through the screenshot 400, the workscope template 128 may be updated to indicate that the selected SB is associated with specific module. The SB mapping feature of the exemplary workscope tool brings SB applicability per asset, e.g., per engine. It provides SB to the workscope level logic and its impact on workscope disassembly levels. Furthermore, the exemplary workscope tool gives visibility into workscope disassembly level and cost (field 402). Moreover, the exemplary workscope tool gives visibility into how it affects multiple modules and levels of disassembly. As such, the exemplary workscope tool has many advantages over typical workscope tools. For instance, typical tools seek to look up all SBs from customer records and shop records in a non-standardized fashion. Thus, with typical tools, there is no way to understand how SB's drive workscope levels. Furthermore, typical tools offer no way to understand how SB's drives cost impact and no way to understand the impact of one SB over multiple modules and levels of disassembly it drives.

## Claims

1. A system for workscoping an asset, the system comprising:
a processor;
a memory including instructions that, when executed by the processor, cause the processor to perform operations comprising:
fetching information indicative of a plurality of service bulletins from a database;
mapping a service bulletin to a module of an asset based on an identity of the asset or the module, and associating a disassembly level for the module to the service bulletin;
providing a workscope template for a module, the workscope template including selectable service bulletins mapped to the module and a module disassembly level; and
prompting a user that a selected service bulletin will increase the module disassembly level in response to user selection of a service bulletin having a greater disassembly level for the module.

2. The system of claim 1, wherein the operations further include identifying conflicts and determining a new level of disassembly for the module.

3. The system of claim 1, wherein the operations further include determining a set of service bulletins applicable to the module based on an identity of the module.

4. The system of claim 1, wherein the operations further include determining and subtracting service bulletins that have previously been completed and determining and adding service bulletins that are outstanding.

## Patentansprüche

1. System zum Festlegen des Arbeitsumfangs für eine Anlage, wobei das System Folgendes umfasst:
einen Prozessor;
einen Speicher mit Anweisungen, die bei Ausführung durch den Prozessor den Prozessor veranlassen, Operationen durchzuführen, die Folgendes umfassen:
Abrufen von Informationen, die eine Vielzahl von Servicebulletins anzeigen, aus einer Datenbank; Abbilden eines Servicebulletins auf ein Modul einer Anlage basierend auf einer Identität der Anlage oder des Moduls, und Zuordnen einer Demontagestufe für das Modul zu dem Servicebulletin;
Bereitstellen einer Arbeitsumfangsvorlage für ein Modul, wobei die Arbeitsumfangsvorlage auswählbare, auf das Modul abgebildete Servicebulletins und eine Moduldemontagestufe einschließt; und
Hinweisen eines Benutzers darauf, dass ein ausgewähltes Servicebulletin die Moduldemontagestufe erhöhen wird, als Reaktion auf eine Benutzerauswahl eines Servicebulletins mit einer höheren Demontagestufe für das Modul.

2. System nach Anspruch 1, wobei die Operationen ferner das Identifizieren von Konflikten und das Bestimmen einer neuen Demontagestufe für das Modul umfassen.

3. System nach Anspruch 1, wobei die Operationen ferner das Bestimmen eines Satzes von Servicebulletins einschließen, die auf das Modul basierend auf einer Identität des Moduls anwendbar sind.

4. System nach Anspruch 1, wobei die Operationen ferner das Bestimmen und Abziehen von Servicebulletins, die zuvor abgeschlossen wurden, sowie das Bestimmen und Hinzufügen von Servicebulletins, die ausstehen, einschließen.

## Revendications

1. Système de définition de périmètre de travail sur un actif, le système comprenant :
un processeur ;
une mémoire contenant des instructions qui, lorsqu'elles sont exécutées par le processeur, amènent le processeur à effectuer des opérations comprenant :
la récupération, à partir d'une base de données, d'informations indicatives d'une pluralité de bulletins de service ;
la mise en correspondance d'un bulletin de service avec un module d'un actif en fonction de l'identité de l'actif ou du module, et l'association d'un niveau de désassemblage du module au bulletin de service ;
la fourniture d'un modèle de périmètre de travail pour un module, le modèle de périmètre de travail comprenant des bulletins de service sélectionnables mis en correspondance avec le module et un niveau de désassemblage de module ; et
l'indication, à un utilisateur, qu'un bulletin de service sélectionné augmentera le niveau de désassemblage de module en réponse à la sélection par l'utilisateur d'un bulletin de service présentant un niveau de désassemblage supérieur pour le module.

2. Système de la revendication 1, dans lequel les opérations comprennent en outre l'identification de conflits et la détermination d'un nouveau niveau de désassemblage pour le module.

3. Système de la revendication 1, dans lequel les opérations comprennent en outre la détermination d'un ensemble de bulletins de service applicables au module en fonction de l'identité du module.

4. Système de la revendication 1, dans lequel les opérations comprennent en outre la détermination et le retrait de bulletins de service qui ont été effectués précédemment, et la détermination et l'ajout de bulletins de service qui sont en attente.
